# EUROPÄISCHE PATENTANMELDUNG

(11) **EP 3 838 657 A1**
(43) Veröffentlichungstag der Anmeldung: **23.06.2021**
(21) Anmeldenummer: 19218788.8
(22) Anmeldetag: 20.12.2019
(51) Int. Cl.: B60L 53/31, B60L 53/30, B60L 53/18, H01R 13/60

(54) **LADEBOXSYSTEM**

(71) Anmelder: ConWys AG, 6023 Rothenburg (CH)
(72) Erfinder: Wystron, Alexander, 6005 Luzern (CH)
(74) Vertreter: Rausch Wanischeck-Bergmann Brinkmann

(57) **Zusammenfassung**

Um ein Ladeboxsystem der gattungsgemäßen Art dahingehend weiterzubilden, dass dieses sowohl als stationäres Gerät als auch als mobiles Gerät verwendbar und hinsichtlich der Anschlussmöglichkeiten flexibel ist, wird mit der Erfindung vorgeschlagen ein Ladebox-System für Elektrofahrzeuge, umfassend ein eine Ladeelektronik aufweisendes Gehäuse (1) und einen mit einem elektrischen Kabel (2) elektrisch mit der Ladeelektronik verbundenen Stecker (3) für die fahrzeugseitige Anschlussdose, wobei das Gehäuse (1) eine elektrisch mit der Ladeelektronik verbundene Schnittstelle für Zuleitungen aufweist.

## Beschreibung

Die vorliegende Erfindung betrifft ein Ladeboxsystem für Elektrofahrzeuge.

Im Stand der Technik sind unterschiedlichste Systeme bekannt, um Elektrofahrzeuge zum Zwecke des Ladevorganges mit einer Ladungsquelle zu verbinden. In jedem Fall ist immer ein Stecker für die fahrzeugseitige Anschlussdose vorgesehen. Dieser Stecker ist über ein elektrisches Kabel dann mit einer Ladeelektronik verbunden. Beispielsweise ist es bekannt, sogenannte Wallboxen einzusetzen. Die Wallboxen sind in der Regel ortsfest positioniert und haben eine Anschlussdose. Ein Kabel, welches einseitig den fahrzeugseitigen Stecker aufweist, weist am anderen Ende den Stecker zum Anschluss an die Anschlussdose einer Wallbox auf. Auf diese Weise kann das Fahrzeug mit der Wallbox verbunden und geladen werden.

Auch ist es bekannt, die Ladeelektronik in einem mobilen Gehäuse anzuordnen, welches zwei Kabel aufweist. Das eine Kabel dient der Anordnung eines fahrzeugseitigen Steckers, das andere Kabel der Aufnahme eines zuleitungsseitigen Steckers. Es ist auch bekannt, unterschiedliche zuleitungsseitige Stecker mit Verbindungsanschlüssen zu versehen, die wiederum mit dem Kabel der Ladeelektronik verbindbar sind.

Ein Nachteil der genannten mobilen Systeme besteht insbesondere darin, dass diese nicht im Sinne einer Wallbox stationär zum einen untergebracht werden können, zum anderen aber funktional einsetzbar sind. Ein weiterer Nachteil besteht darin, dass hinsichtlich der Einsatz- und Anschlussmöglichkeiten keine ausreichende Flexibilität gegeben ist.

Der vorliegenden Erfindung liegt die **Aufgabe** zugrunde, ein Ladeboxsystem der gattungsgemäßen Art dahingehend weiterzubilden, dass dieses sowohl als stationäres Gerät als auch als mobiles Gerät verwendbar und hinsichtlich der Anschlussmöglichkeiten flexibel ist.

Zur technischen **Lösung** dieser Aufgabe wird ein Ladeboxsystem mit den Merkmalen des Patentanspruches 1 vorgeschlagen. Weitere Vorteile und Merkmale ergeben sich aus den Unteransprüchen.

Bei der erfindungsgemäßen Lösung wird davon ausgegangen, dass die Ladeelektronik in einem wie auch immer gebildeten Gehäuse angeordnet ist. Dieses Gehäuse weist eine mit der Ladeelektronik verbundene Schnittstelle für Zuleitungen auf. Weiterhin ist der fahrzeugseitige Stecker über ein Kabel mit der Ladeelektronik verbunden. Diese Einheit aus Gehäuse, Kabel und Stecker für den fahrzeugseitigen Anschluss kann nun beliebig eingesetzt werden, da über die Schnittstelle ein beliebiger Zuleitungsanschluss realisiert werden kann.

Die Schnittstelle kann ein Kontaktfeld sein oder ein entsprechend vorgesehenes Steckdosensystem. Gemäß einem vorteilhaften Vorschlag der Erfindung kann ein Adapter mit einem Zuleitungskabel versehen an dem Gehäuse derart angeordnet werden, dass über das Kontaktfeld eine Zuleitungskontaktierung erfolgt. Zu diesem Zweck kann an dem Gehäuse beispielsweise eine Positionierungseinheit ausgebildet sein, die sicherstellt, dass der Adapter in der richtigen Position und elektrisch richtigen Orientierung angeschlossen wird. Auch können Rastnuten und/oder Befestigungselemente vorgesehen sein, um einen Adapter am Gehäuse zu fixieren. Auch kann es sich hierbei um elastische Elemente, Nut-Feder-Systeme, Klemmbügel und dergleichen handeln.

In vorteilhafter Weise ist vorgesehen, dass das Gehäuse stoßgesichert ist und gegebenenfalls die Ladeelektronik stoßgesichert im Gehäuse angeordnet ist. Der Stoßschutz für das Gehäuse kann durch entsprechende elastische Elemente gebildet sein.

In vorteilhafter Weise kann des Weiteren vorgesehen sein, dass das Gehäuse wasserdicht ausgebildet ist. Insbesondere im mobilen Einsatz ist diese Ausgestaltung von Vorteil, weil damit sichergestellt ist, dass insbesondere Regenwasser nicht ungewollt in das Gehäuse eindringen kann.

In vorteilhafter Weise kann des Weiteren vorgesehen sein, dass das Gehäuse kratzgeschützt ausgebildet ist. Zu diesem Zweck kann eine Schutzhülle beispielsweise aus Gummi oder einem gummiartigen Material vorgesehen sein, die das Gehäuse im bestimmungsgemäßen Verwendungsfall umgibt. Dabei kann die Hülle geschlossen oder nur teilgeschlossen ausgebildet sein. Entscheidend ist, dass das Gehäuse auch im Sturzfall vor einer Beschädigung beispielsweise durch Verkratzen geschützt ist. Diese Ausgestaltung ist insbesondere für den mobilen Einsatz von Vorteil.

In vorteilhafter Weise umfasst das Ladeboxsystem eine Wandhalterung, die ihrerseits ein Anschlussadapterfeld zum Anschluss an die gehäuseseitige Schnittstelle umfasst. Die Wandhalterung dient der Aufnahme des Gehäuses, so dass auf diese Weise praktisch eine ortsfeste Wallbox-ähnliche Anordnung möglich ist.

Das erfindungsgemäße Ladeboxsystem ermöglicht es nun, zum einen das Gehäuse mit dem fahrzeugseitigen Anschluss und den oder die gewünschten Adapter mobil mitzuführen, um je nach Gegebenheiten eine Ladung durchführen zu können.

Weiterhin ermöglicht das System, das Gehäuse über die Wandhalterung im Bereich eines Gebäudes, der Garage oder sonst wo ortsfest zu positionieren und somit eine Wallbox nachzubilden.

Gemäß einem weiteren Merkmal der Erfindung wird ob der Möglichkeit, das erfindungsgemäße Ladeboxsystem entweder im stationären Einsatz oder mobil zu verwenden, des Weiteren vorgeschlagen, dass im bestimmungsgemäßen Verwendungsfall die Stromaufnahme einstellbar ist. Es kann dabei vorgesehen sein, dass die Stromaufnahme nutzerseitig individuell einstellbar ist. Alternativ oder in Kombination hierzu kann auch vorgesehen sein, die Stromaufnahme begrenzen zu können, indem eine maximale Stromaufnahme nutzerseitig vorausgewählt werden kann. So kann beispielsweise die maximale Stromaufnahme auf 32 A begrenzt sein. Eine Einstellbarkeit kann beispielsweise zwischen 8 A und 32 A gewählt werden.

Gemäß einem weiteren vorteilhaften Vorschlag der Erfindung ist die Ladeelektronik mit einer Originalitätssicherung versehen. Dies kann Hardware oder Software sein, ein Schlüssel oder ein Code. Dadurch kann die Ladebox gegen unbefugte Benutzung und somit zumindest indirekt gegen Diebstahl gesichert werden.

Gemäß einem weiteren Vorschlag der Erfindung ist zum Systemschutz und/oder Gehäuseschutz ein Schloss, beispielsweise ein Zahlenschloss vorgesehen. Eine bestimmungsgemäße Verwendung ist demnach nur möglich, wenn zuvor nutzerseitig das Schloss geöffnet worden ist. So kann beispielsweise vorgesehen sein, dass die gehäuseseitigen Schnittstellen erst dann frei zugänglich sind, wenn eine schlossgesicherte Abdeckung nach einem Öffnen des Schlosses entfernt worden ist. Eine solche Ausgestaltung schützt vor einer unbeabsichtigten Inverwendungnahme durch Dritte/oder einem Diebstahl.

Gemäß einem weiteren vorteilhaften Vorschlag der Erfindung ist innerhalb des Gehäuses eine Kommunikationseinheit vorgesehen. Diese ist vorzugsweise dazu ausgerüstet, mit einem Lademanagement zu kommunizieren. Dabei kann das Lademanagement fahrzeugseitig und/oder im stationären Ladefall stationärseitig vorgesehen sein. Im Betriebsfall ist so eine Kommunikation mit dem Lademanagementsystem möglich, was einen optimierten Ladevorgang gestattet. Zudem dient eine solche Kommunikation mit dem Lademanagement zugleich auch als Diebstahlsicherung, da es beispielsweise zu einer Alarmauslösung kommen kann, wenn es zu einer ungewollten, nicht ordnungsgemäßen elektrischen Trennung von Systemkomponenten kommt.

Durch das erfindungsgemäße System werden redundante Systeme unnötig und damit der wirtschaftliche Aufwand für den Verbraucher erheblich reduziert. Andererseits werden die Anschlussmöglichkeiten flexibler, da auch die Möglichkeit besteht, neutrale Adapter im System zu haben, die mit jeweils neuen Steckersystemen kombiniert werden können.

Weitere Vorteile und Merkmale der Erfindung ergeben sich aus der folgenden Beschreibung anhand der Figuren. Dabei zeigen:
- Fig. 1: ein Ausführungsbeispiel der Erfindung in Bezug auf das Gehäuse mit der Ladeelektronik;
- Fig. 2: ein Wandanschlussgehäuse und
- Fig. 3: ein Anschlussadapter.

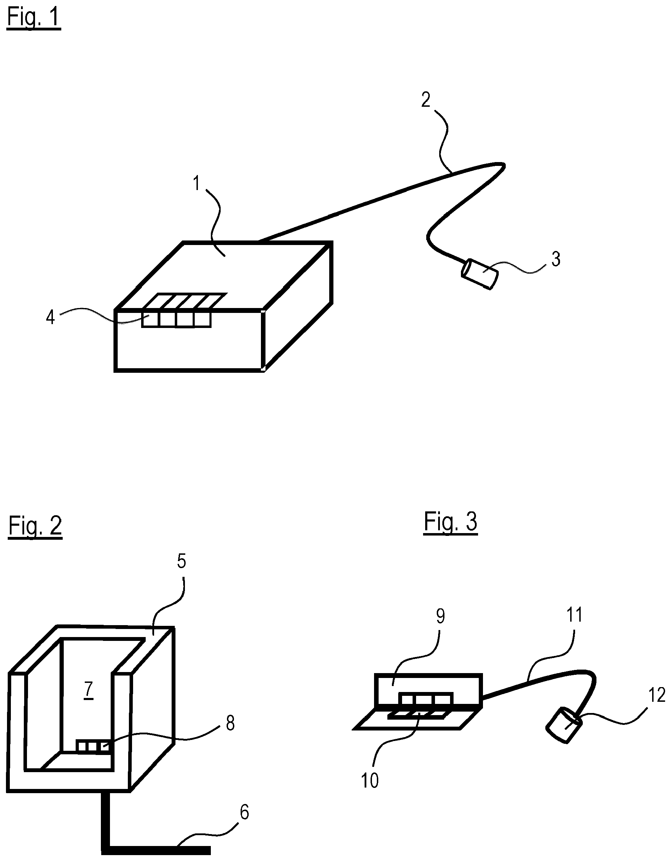

Gemäß Figur 1 ist in einem Gehäuse 1 eine nicht gezeigte Ladeelektronik angeordnet. Diese ist über ein Kabel 2 mit einem Fahrzeuganschlussstecker 3 verbunden, welcher in die entsprechende Anschlussdose eines Fahrzeuges eingesteckt wird. Am Gehäuse ist eine Schnittstelle in Form eines Kontaktfeldes 4 ausgebildet.

Gemäß Figur 2 kann ein Gehäuse 5 an einer Wand, beispielsweise einer Garage oder dergleichen, angeordnet werden. Über ein Kabel 6 ist das Gehäuse mit einem Festnetz verbunden. Das Gehäuse weist einen Aufnahmeraum 7 auf, der der Aufnahme eines Gehäuses 1 dient. Über das Kontaktfeld 8 kann dann mit dem Kontaktfeld 4 des Gehäuses 1 ein entsprechender Kontakt hergestellt werden.

Der Adapter gemäß Figur 3 weist eine Adaptermimik 9 auf, die das Kontaktfeld 10 umfasst. Dieses Kontaktfeld 10 dient der Verbindung mit dem Kontaktfeld 4 eines Gehäuses 1. Über eine Leitung 11 ist das Kontaktfeld verbunden mit einem Zuleitungsstecker 12, beispielsweise einem Stecker zum Anschluss an ein Feststromnetz oder der Ladungsquelle.

Die beschriebenen Ausführungsbeispiele dienen der Erläuterung und sind nicht beschränkend.

### Bezugszeichen

- 1: Gehäuse
- 2: Kabel
- 3: Fahrzeuganschlussstecker
- 4: Kontaktfeld
- 5: Wandgehäuse
- 6: Zuleitung
- 7: Aufnahmeraum
- 8: Kontaktfeld
- 9: Adapter
- 10: Kontaktfeld
- 11: Leitung
- 12: Anschlussstecker

## Patentansprüche

1. Ladebox-System für Elektrofahrzeuge, umfassend ein eine Ladeelektronik aufweisendes Gehäuse (1) und einen mit einem elektrischen Kabel (2) elektrisch mit der Ladeelektronik verbundenen Stecker (3) für die fahrzeugseitige Anschlussdose, **dadurch gekennzeichnet, dass** das Gehäuse (1) eine elektrisch mit der Ladeelektronik verbundene Schnittstelle für Zuleitungen aufweist.

2. Ladebox-System nach Anspruch 1, **dadurch gekennzeichnet, dass** das System eine Zuleitung (11) mit einem Stecker (12) für ein Feststromnetz und einem Anschlussadapter (9) zum Anschluss an die Schnittstelle umfasst.

3. Ladebox-System nach einem der vorhergehenden Ansprüche, **dadurch gekennzeichnet, dass** das System eine Wandhalterung (5) mit einem Anschlussadapter zum Anschluss an die Schnittstelle umfasst.

4. Ladebox-System nach Anspruch 3, **dadurch gekennzeichnet, dass** die Wandhalterung (5) mit dem Feststromnetz verbunden ist.

5. Ladebox-System nach einem der vorhergehenden Ansprüche, **dadurch gekennzeichnet, dass** das Gehäuse (1) stoßgeschützt ist.

6. Ladebox-System nach einem der vorhergehenden Ansprüche, **dadurch gekennzeichnet, dass** das Gehäuse (1) wassergeschützt, vorzugsweise wasserdicht ausgebildet ist.

7. Ladebox-System nach einem der vorhergehenden Ansprüche, **dadurch gekennzeichnet, dass** die Ladeelektronik im Gehäuse (1) stoßgesichert angeordnet ist.

8. Ladebox-System nach einem der vorhergehenden Ansprüche, **dadurch gekennzeichnet, dass** am Gehäuse (1) Rastnuten für Adapter angeordnet sind.

9. Ladebox-System nach einem der vorhergehenden Ansprüche, **dadurch gekennzeichnet, dass** am Gehäuse (1) Befestigungselemente für Adapter angeordnet sind.

10. Ladebox-System nach einem der vorhergehenden Ansprüche, **dadurch gekennzeichnet, dass** am Gehäuse (1) Positionierelemente für Adapter angeordnet sind.

11. Ladebox-System nach einem der vorhergehenden Ansprüche, **dadurch gekennzeichnet, dass** die Ladeelektronik mit einer Originalitätssicherung versehen ist.
